(19) Europäisches Patentamt
European Patent Office
Office européen des brevets

(11) **EP 4 307 009 A1**

(12) **EUROPEAN PATENT APPLICATION**

(43) Date of publication:
**17.01.2024 Bulletin 2024/03**

(21) Application number: **23168078.6**

(22) Date of filing: **14.04.2023**

(51) International Patent Classification (IPC):
**G01S 19/20** (2010.01)    **G01S 19/44** (2010.01)

(52) Cooperative Patent Classification (CPC):
**G01S 19/44; G01S 19/20;** G01S 19/396

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.07.2022 EP 22184204**

(71) Applicant: **u-blox AG
8800 Thalwil (CH)**

(72) Inventors:
• **SHERET, Ian
Hitchin (GB)**
• **JULIEN, Oliver
Oberrieden (CH)**
• **HIDE, Christopher
Reigate (GB)**
• **DORAHY, Hayden
Leatherhead (GB)**
• **BRYANT, Roderick
Conder (AU)**

(74) Representative: **Elkington and Fife LLP
Prospect House
8 Pembroke Road
Sevenoaks, Kent TN13 1XR (GB)**

(54) **GNSS MEASUREMENT PROCESSING TO IDENTIFY MODES**

(57)     A method and apparatus are disclosed for processing GNSS measurements. The GNSS measurements comprise carrier phase measurements. A state vector is defined, comprising state variables. A posterior probability density for the state vector is obtained, which is based on non-Gaussian residual error models for the GNSS measurements. A systematic search of the posterior probability density is performed, to identify a set of modes of the probability density.

FIG. 5

**Description**

FIELD OF THE INVENTION

The present invention relates to Global Navigation Satellite Systems (GNSS). In particular, it relates to a method and apparatus for processing GNSS measurements.

BACKGROUND OF THE INVENTION

Techniques for GNSS positioning are well known in the art. Existing GNSS include the Global Positioning System (GPS), Galileo, GLONASS, and BeiDou Navigation Satellite System (BDS), also referred to herein simply as "BeiDou". Each GNSS comprises a constellation of satellites, also known in the art as "space vehicles" (SVs), which orbit the earth. Typically, each SV transmits a number of satellite signals. These are received by a GNSS receiver, for which it is desired to calculate state information, such as a navigation solution. The GNSS receiver can generate a number of ranging and/or Doppler measurements using the signals, to derive information about the distance between the receiver and respective satellites (and/or the rate of change of these distances). When a sufficient number of measurements can be made, the receiver's position and/or velocity can then be calculated.

Various effects can introduce errors into the measurements. In turn, errors in the measurements can lead to errors in the resulting state estimate. Sources of error include, for example, multipath interference. This may be a particular problem for navigation systems of road vehicles. In the signal environments commonly encountered by road vehicles, multipath interference can be caused by reflection or occlusion of satellite signals by other vehicles, or by buildings or vegetation.

Other sources of error include variations in atmospheric delay, as the satellite signals pass through the troposphere or ionosphere. In addition to such "innocent" sources of error, there may be malicious interference, such as jamming or spoofing signals. Jamming signals are transmitted with the deliberate aim to prevent a GNSS receiver from receiving satellite signals successfully. Spoofing involves transmitting a signal that emulates a real satellite signal, with the intention that a GNSS receiver will mistakenly acquire and track the spoofed signal. This can be used by an attacker to deliberately introduce false information into the multilateration calculation, leading to a false position or velocity estimate.

Obviously, it would be desirable to calculate a state estimate as accurately as possible in spite of all of these sources of error. However, it is inevitable that they will sometimes cause the state estimate to be inaccurate. It is desirable to know whether a state estimate is accurate or not - and to quantify the expected accuracy. For example, in autonomous driving applications, it is very important to be able to determine when the uncertainty in the vehicle position is too great for the position estimate to be used safely to control navigation of the vehicle.

In this context, the concept of an "alert limit" or "alarm limit" is sometimes used. This may be defined as the maximum allowable error (for example, error in position) that can be permitted without triggering a hazardous situation.

The concept of "integrity risk" is also used. This may be defined as the probability that the actual position error exceeds the alert limit without any alert flags at a given moment in time. The integrity risk thus describes the level of trust or confidence in the accuracy of the GNSS position estimate.

The uncertainty associated with a position estimate may be quantified in terms of a "protection level". This is defined as a statistical error bound, computed such that the probability of the position error exceeding the bound is less than or equal to a target integrity risk. The protection level may be provided in terms of a radius, in which case the protection level defines a circle in which there is a (quantifiably) high probability of the vehicle being located. A protection level can be used in conjunction with an alert limit, to alert a user of a navigation application, or to trigger other mitigating actions in an automated system. Whenever the protection level exceeds the alert limit, the system alerts the user or takes the necessary mitigating actions, as appropriate. There is, however, always a small risk that the position estimate deviates from the true position by more than the reported protection level. One of the aims of an integrity monitoring system is to minimise this risk by estimating the position or error bound - for example, the protection level - as reliably as possible.

EP 3 859 397 A1 discloses a method for determining a protection level of a position estimate using a single epoch of GNSS measurements. The method includes: specifying a prior probability density $P(x)$ of a state $x$; specifying a system model $h(x)$ that relates the state $x$ to observables $z$ of the measurements; quantifying quality indicators $q$ associated with the measurements; specifying a non-Gaussian residual error probability density model $f(r|\theta, q)$ and fitting model parameters $\theta$ using experimental data; and defining a posterior probability density $P(x|z, q, \theta)$; estimating the state $x$; and computing the protection level by integrating the posterior probability density $P(x|z, q, \theta)$ over the state $x$. EP 3 859 397 A1 proposes the particular example of Student's T-distribution, as the non-Gaussian residual error probability density model.

SUMMARY OF THE INVENTION

As explained above, it is desirable to ensure the integrity of the navigation solution by computing reliable error bounds that are sufficiently tight to provide a high availability of the system. More generally, it is desirable to infer state information as accurately as possible from GNSS measurements. A key aspect in achieving these goals is to model the probability density function of errors as accurately as possible in the set of GNSS measurements that are used to infer the state information. Errors in the modelling of the probability density function are likely to give rise to errors in the resulting inferred state information. Errors in bounds on states may manifest themselves either in unduly high confidence or in unduly low confidence in the state information. Both types of error may be problematic in their own ways. For example, if too low an estimate is provided for the protection level, there is an increased risk that the true error exceeds an alarm limit without the system realising it. Conversely, if too high an estimate is provided for the protection level, the system may give too many false alarms.

It would also be desirable to perform the integration of the posterior probability density as accurately and efficiently as possible. In this regard, a challenge arises when the GNSS measurements include carrier phase measurements. Because of the integer ambiguity inherent in each carrier phase measurement, the posterior probability density (for example, over position) is multimodal. Each mode of the distribution corresponds to one possible combination of integer values for resolving (or "fixing") the ambiguities.

The present inventors have recognised that it can be advantageous to identify the modes explicitly. The information about the modes can be exploited to improve the efficiency of the integration (which may involve numerical integration), for example by implementing more targeted random sampling of the probability density. This approach can yield particular benefits in the context of non-Gaussian distributions (which allow more accurate modelling of measurement errors). Existing algorithms for dealing with integer ambiguities in carrier phase measurements tend to assume a Gaussian distribution of errors. Such algorithms allow computational efficiency at the expense of less accurate modelling of the error distribution.

According to an aspect of the present invention there is provided a method of processing a plurality of GNSS measurements, comprising:

> obtaining the plurality of GNSS measurements, wherein the plurality of GNSS measurements includes a plurality of carrier phase measurements;
> defining a state vector, the state vector comprising state variables;
> obtaining a posterior probability density for the state vector, wherein the posterior probability density is based on one or more residual error models describing a probability distribution of errors in each of the GNSS measurements, the one or more residual error models including at least one non-Gaussian model; and
> performing a systematic search of the posterior probability density to identify a set of modes of the posterior probability density.

Here, "search" means that the method finds modes satisfying specified criteria - in particular, satisfying certain minimum probability criteria. Here, "systematic" means that the search is deterministic rather than random/stochastic. It also means that the search is complete (in other words, exhaustive) within certain defined limits. Consequently, the search is guaranteed to find all modes satisfying the specified criteria. One related implication is that the number of modes to be found is not specified in advance - the systematic search itself determines how many modes it will find. (This determination is typically implicit and retrospective - that is, the number of modes to find is not determined at the start of the search, but only at the end, after all relevant modes have been found.) The systematic search may be configured to find a subset of a set of modes that is in principle infinite.

In some examples, the search comprises a recursive, depth-first search over a set of carrier phase ambiguities. This means that the search over one ambiguity triggers the search over the next ambiguity, until a complete candidate set of ambiguities has been evaluated.

Each mode may be characterized by a local maximum of the posterior probability density function. Thus, the result of the systematic search may comprise a set of local maxima of the posterior probability density function.

The method may further comprise outputting a list of the modes. Optionally, the method may comprise outputting each mode (defined by the coordinates of the local maximum, for example) together with an associated probability.

The plurality of GNSS measurements may include pseudorange measurements. The posterior probability density may be constrained by pseudorange measurements.

The at least one non-Gaussian model may include any one or any combination of two or more of:

> a Student's T-distribution, modelling a pseudorange measurement;
> a Student's T-distribution, modelling a carrier range measurement (in particular, a carrier range measurement whose integer ambiguity has been fixed); and

a cyclic probability density, modelling a carrier range measurement (in particular, a float carrier range measurement, whose integer ambiguity remains unfixed).

The state variables may also include velocity and/or time variables.

A single residual error model may describe a probability distribution of one or more of the GNSS measurements. That is, the error in one GNSS measurement may be modelled as a univariate distribution, or the errors in two or more GNSS measurements may be modelled jointly as a multivariate distribution. Each GNSS measurement is modelled by one of the (one or more) residual error models. The number of residual error models is therefore less than or equal to the number of GNSS measurements. At one extreme, each GNSS measurement could be modelled by a separate (univariate) residual error model. At the other extreme, all GNSS measurements could be modelled together by a single (multivariate) residual error model.

Of specific interest, for the present disclosure, are the one or more residual error models that describe the probability distribution of errors in those carrier phase measurements).

The residual error model(s) may be generated in advance for use in the inference method. The residual error model(s) may be generated from empirical data, comprising GNSS measurements, quality indicators associated with those GNSS measurements, and residual errors associated with those GNSS measurements. Collectively, these may be referred to as empirical or training data.

Obtaining the posterior probability density may comprise calculating it. Calculating the posterior probability density may comprise multiplying the probability distribution of the errors by a prior probability density of the state vector.

The posterior probability density may be calculated based on GNSS measurements from a single measurement epoch.

The state variables may include at least position variables. Alternatively or in addition, the state variables may include carrier phase ambiguities. The carrier phase ambiguities may comprise float carrier phase ambiguity values.

The systematic search may comprise a recursive search, including a level of recursion for each carrier phase measurement. Each level of recursion (other than a final level) may comprise: defining one or more candidate integer ambiguity values associated with the carrier phase measurement for that level; and testing each candidate integer ambiguity value.

Defining the one or more candidate integer ambiguity values optionally comprises identifying a range of integer values for which the posterior probability density is above a predetermined threshold.

The range may be based around (optionally centred on) a float solution for the carrier phase ambiguity associated with the current level of recursion. Identifying the range of integer values may comprise: identifying a first sub-range of integer values that are greater than the value of the float solution; and identifying a second sub-range of integer values that are less than the value of the float solution.

In some examples, identifying the first sub-range of integer values may comprise, starting from the value of the float solution, successively incrementing an integer value and evaluating the posterior probability density for the incremented integer value until the posterior probability density falls below the predetermined threshold. The last integer value for which the posterior probability density was above the predetermined threshold may then define the upper end of the range.

Identifying the second sub-range of integer values may comprise, starting from the value of the float solution, successively decrementing an integer value and evaluating the posterior probability density for the decremented integer value until the posterior probability density falls below the predetermined threshold. The last integer value for which the posterior probability density was above the predetermined threshold may then define the lower end of the range.

The method may comprise, at each level of recursion, determining whether there are any candidate integer ambiguity values whose posterior probability density is above the predetermined threshold, and, responsive to determining that there are no such candidate integer ambiguity values, terminating the recursive search at that level and returning to the previous level. When a branch of the search terminates in this way, it implies that there are no viable modes (that is, no modes that meet the necessary minimum probability criterion) with the candidate integer ambiguity values that have been fixed up to that point in the recursive search.

The state vector may include carrier phase ambiguities and testing each candidate integer ambiguity value may comprise: fixing the candidate integer ambiguity value; and performing a local search of any remaining carrier phase ambiguities and the other state variables of the state vector.

In the local search, the "remaining" carrier phase ambiguities (if any) are not fixed - that is, they are float ambiguities. The carrier phase ambiguities are thus fixed (to integer values) successively at successive levels of the recursion. By the final level of recursion, all of the carrier phase ambiguities have been fixed to integers.

The local search of the remaining carrier phase ambiguities (if any) and the other state variables may comprise finding a local maximum of the posterior probability density. The result of the local search may comprise a float solution for any remaining carrier phase ambiguities and for the other state variables (optionally including position variables). This float solution is the maximum likelihood state vector - that is, the state vector that achieves the local maximum of the posterior probability density.

The recursive search may proceed to the next level of recursion after the local search. At the next level of the recursive search, the result of the local search may be used to define one or more candidate integer ambiguity values associated with the carrier phase measurement for that level. Those candidate integer ambiguity values may be defined in the same manner as summarised above - by identifying a range of integer values for which the posterior probability density is above a predetermined threshold.

When the final level of recursion is reached, all the candidate integer ambiguity values are fixed. In some implementations, the last candidate integer ambiguity value will have been fixed at the preceding level of recursion. In such implementations, a local search has already been performed (at the penultimate level of recursion) over the other state variables of the state vector, to find the local maximum (mode) of the posterior probability density. This local maximum is associated with the particular combination of candidate fixed integer ambiguity values that were arrived at through the recursion. The local maximum is a mode of the posterior probability density.

Each local search may comprise solving a non-linear optimization problem. The non-linear optimization problem may be solved by one of a number of suitable numerical methods. In some examples, the non-linear optimization may be solved by posing it as a model fit. The model fit may be performed (and the non-linear optimization thereby solved) using a Gauss-Newton method, among other possible numerical methods. Posing the optimization as a model fit can allow a solution to be found more efficiently, in general. In particular, using a Gauss-Newton method can enable a computationally efficient solution.

Fixing the candidate integer ambiguity value may comprise replacing a cyclic probability density model for the carrier phase measurement with a unimodal probability density model.

The local search of the remaining carrier phase ambiguities (if any) and the other state variables may comprise finding a local maximum of the posterior probability density, wherein the posterior probability density is based on the unimodal probability density model.

Testing each candidate integer ambiguity value optionally comprises: evaluating a probability density associated with the candidate integer ambiguity value; and comparing the probability density with a threshold.

In particular, testing each candidate integer ambiguity value may comprise: evaluating the local maximum of the posterior probability density associated with the candidate integer ambiguity value; and comparing the local maximum with a threshold. The local maximum may be found by a local search as summarised above.

The method may comprise, responsive to the probability density exceeding the threshold, continuing the recursion to the next level.

In this way, the method implements a depth-first recursive search.

The method optionally comprises, responsive to the probability density not exceeding the threshold, terminating the current level of the recursion and returning to the preceding level.

The method may comprise, at the final level of recursion, identifying a mode of the posterior probability density for each of the candidate integer ambiguity values, wherein each mode is associated with a combination of the candidate integer ambiguity values from across all of the preceding levels of recursion.

As summarised above, the candidate integer ambiguity values may be defined by identifying a range of integer values for which the posterior probability density is above a predetermined threshold. At the final level of recursion (at which all ambiguities are fixed) each such viable candidate corresponds to a mode of the posterior probability density. In some implementations the coordinates of the mode will have been found through the local search at the preceding level of recursion. If not, a further local search may be performed to determine the coordinates of the mode.

The method may further comprise inferring state information based on the posterior probability density, wherein the inferring optionally comprises integrating the posterior probability density, and wherein the integrating is based on the identified set of modes. The integrating may comprise numerical integration, but is not limited to this. The integrating may comprise integrating with respect to position variables of the state vector, for example.

The inferred state information comprises at least one of: a position estimate; and an error bound for the position estimate.

An error bound for the state vector defines probabilistic bounds on the range of each of the state variables. In some cases, bounds may be calculated for state variables (for example, position variables) in addition to estimating the state variables themselves. In other cases, the bounds may be calculated without estimating the state variables themselves.

Calculating an estimate of one or more state variables of the state vector may comprise calculating a maximum likelihood estimate of the state variables. Similarly, calculating the error bound may comprise evaluating the posterior probability density of the state variables to calculate bounds on those variables.

The error bound for the position estimate may comprise or consist of a protection level.

The integrating may comprise at least one of: importance sampling based on the identified set of modes; an MCMC method based on the identified set of modes; and approximation of the posterior probability density with a mathematical model which can be integrated analytically, wherein the mathematical model is based on the identified set of modes.

The first two alternatives are examples of numerical integration techniques. Various numerical techniques can be used to enhance the efficiency of numerical integration, based on knowledge of the identified set of modes. The latter alternative does not use numerical integration. The mathematical model used to approximate the posterior probability density may be a parametric model, wherein the parameters of the model are based on the identified set of modes. Suitable parametric models include (but are not limited to) mixture models, such as a Gaussian mixture model (GMM).

Also provided is a computer program comprising computer program code configured to cause one or more processors to perform all the steps of a method as summarized above when said computer program is run on said one or more processors. The one or more processors may comprise or consist of one or more processors of a GNSS receiver. The computer program may be stored on a computer-readable storage medium (optionally non-transitory).

Also provided is a GNSS receiver comprising:

a signal processing unit, configured to produce a plurality of GNSS measurements wherein the plurality of GNSS measurements includes a plurality of carrier phase measurements; and
at least one processor, configured to:

obtain the plurality of GNSS measurements;
define a state vector, the state vector comprising state variables;
obtain a posterior probability density for the state vector, wherein the posterior probability density is based on one or more residual error models describing a probability distribution of errors in each of the GNSS measurements, the one or more residual error models including at least one non-Gaussian model; and
perform a systematic search of the posterior probability density to identify a set of modes of the posterior probability density.

The GNSS receiver may further comprise an RF front-end. The RF front-end may be configured to receive GNSS signals via an antenna. The signal processing unit may be configured to make GNSS measurements (carrier range measurements and optionally pseudorange measurements) on the GNSS signals received by the RF front-end.

BRIEF DESCRIPTION OF THE DRAWINGS

The invention will now be described by way of example with reference to the accompanying drawings, in which:

Fig. 1 is a schematic block diagram of a GNSS receiver according to an example;
Fig. 2 is a flowchart illustrating a method performed by the GNSS receiver of Fig. 1 according to an example;
Fig. 3 is a flowchart illustrating one way of inferring state information in the method of Fig. 2;
Fig. 4 is a flowchart illustrating the calculation of state bounds, according to an example;
Fig. 5 is a flowchart illustrating a method for performing a systematic search for modes, according to an example;
Fig. 6 shows an example of a cyclic probability distribution for representing the integer part of a carrier phase measurement, and a unimodal bounding distribution for fixing such a measurement, according to an example; and
Figs. 7A-7C illustrate a process of identifying modes by recursive search, for an exemplary posterior probability density.

It should be noted that these figures are diagrammatic and not drawn to scale.

DETAILED DESCRIPTION

Reference will now be made in detail to examples according to the present disclosure, which are illustrated in the accompanying drawings. The described examples should not be construed as being limited to the descriptions given in this section. Other examples may have different forms.

For the understanding of the following description, it is assumed that the reader is familiar with the general principles described in EP 3 859 397 A1 (which is incorporated herein by reference).

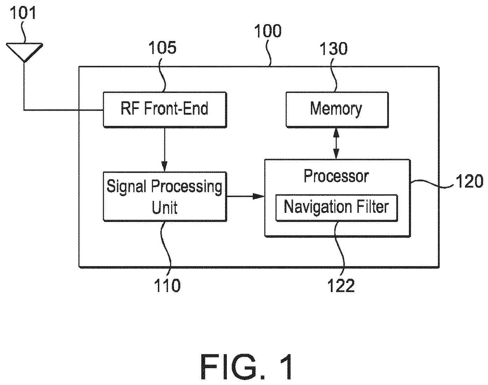

Fig. 1 is a schematic block diagram of a device according to an example. The device comprises a GNSS antenna 101 and a GNSS receiver 100. The GNSS antenna 101 is configured to receive GNSS signals. It may be configured to receive GNSS signals from a single GNSS constellation (for example, GPS), or it may be configured to receive GNSS signals from multiple constellations (for example, GPS, Galileo, GLONASS, and/or BeiDou). The GNSS receiver 100 comprises an RF front-end 105, a signal processing unit 110, a processor 120, and a memory 130. The RF front-end 105 is configured to receive GNSS signals via the GNSS antenna 101, and to output them to the signal processing unit 110. The RF front-end 105 is configured to down-convert and digitise the satellite signals received via the antenna 101. The RF front-end essentially conditions the signals for subsequent signal processing. Other typical tasks performed by the front-end include filtering and amplification. The satellite signals received at the RF front-end 105 via the antenna 101 include at least one ranging signal, such as a GPS L1 C/A signal, for each of a plurality of satellites. The signal processing unit 110 is configured to track the received GNSS signals - for example, in frequency, delay (code-phase) and carrier phase - and to produce GNSS measurements from the received GNSS signals. It is further configured to generate at least one quality indicator for each GNSS measurement. The processor 120 is configured to process the GNSS measurements obtained from the signal processing unit 110. While it should be understood that more than one processor may be present within the GNSS receiver 100 for implementing methods according to the present disclosure, for the purposes of the present description it is assumed that there is only one processor 120, as depicted in Fig. 1. In the present example, the processor implements a navigation filter 122 as described for the calculation of the single-epoch position bound in EP 3 859 397 A1. At each of a plurality of time increments (epochs), the navigation filter 122 estimates the current value of a state vector of state variables, optionally with their associated uncertainties. In the context of positioning, the state variables estimated by the navigation filter 122 generally include position and time variables, and optionally velocity and other variables. The memory 130 is in communication with the processor 120. The memory 130 is configured to store software/firmware to be executed by the processor 120. The software/firmware is configured to control the processor 120 to carry out a processing method according to an example. The memory may also be configured to store data that is used as input to the processor 120 and/or to store data that is output by the processor 120.

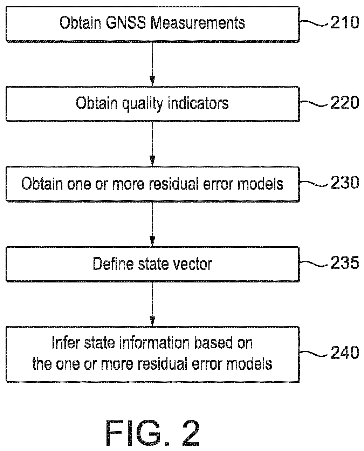

Fig. 2 illustrates a method performed by the processor 120 according to an example. In step 210, the processor 120 obtains a plurality of GNSS measurements from the signal processing unit 110. The GNSS measurements are all obtained from the same epoch - that is, they are all made by the signal processing unit 110 at substantially the same time. The GNSS measurements include at least carrier phase measurements. In the present example, they also include pseudorange measurements. Each measurement (be it a pseudorange measurement or a carrier phase measurement) relates to a particular GNSS signal transmitted by a particular satellite. In the present example, the plurality of GNSS measurements include pseudorange and carrier phase measurements for L1 and L2 signals of several GPS satellites. Typically, in order to calculate a position and time solution from the GNSS measurements alone, measurements of four signals from four respective satellites are obtained. In general, the measurements may relate to different satellites of the same constellation or, satellites of different constellations.

The signal processing unit 110 is configured to provide one or more quality indicators associated with each GNSS measurement. The quality indicators quantify the quality of the measurements (or the GNSS signals on which the measurements are based). In particular, they quantify (or are correlated with) signal distortion. Suitable quality indicators can include but are not limited to: carrier-to-noise power ratio, carrier-to-noise density, carrier-to-noise density variability, carrier phase variance, multipath deviation, loss-of-lock detection, code lock time and phase lock time, satellite elevation, and satellite azimuth.

Measurements do not all have the same error distributions. Some measurements will have broader distributions and/or higher tail probabilities. For instance, measurements with low signal-to-noise density ratio will be noisier, as will measurements from satellites at low elevations. By taking into account effects such as these, examples according to the present disclosure can enable more accurate modelling of the error distributions. According to some examples, the error probability distributions described by the residual error models are conditioned on (that is, are dependent on) a number of quality indicators. Essentially, the quality indicators are predictive of the parameters of the error distribution.

In the present example, two quality indicators are used. The first is the carrier-to-noise density ratio of the GNSS signal from which the GNSS measurement (carrier phase or pseudorange) is derived. This quality indicator is provided by the signal processing unit 110.

The second quality indicator is a window-based quality indicator, which seeks to quantify the extent to which a given measurement is consistent with other measurements in a given time-window. This quality indicator consists of a "window RMS residual", which is high for measurements that deviate significantly from the consensus in the window. This second quality indicator is calculated by the processor 120. Further details of the window-based quality indicator can be found in EP 3 859 397 A1.

Optionally the quality indicators may be used to exclude signals or measurements from the subsequent analysis. For example, if one or both of the quality indicators indicates that a measurement is of very low quality (very low carrier-to-noise density ratio, or very high window RMS residual) then that measurement (or signal) may be entirely excluded from use in inferring the state information. In other examples, measurements may be excluded if they exhibit a combination of quality indicators that was rare in the training data used to generate the residual error models (regardless of whether the quality indicators suggest high or low quality). This acknowledges the fact that the residual error models might not be reliable for types of GNSS measurements that were poorly represented in the training data.

It should be understood that the window-based quality indicator is specific to each individual measurement - a pseudorange measurement and a carrier phase measurement from the same GNSS signal will generally be assigned different values of the window-based quality indicator. In contrast, the first quality indicator (carrier-to-noise density ratio) is the same for both the pseudorange measurement and the carrier phase measurement derived from a given GNSS signal.

In principle, any number of quality indicators could be used to condition the error probability distributions. However, in practice, if too many quality indicators are used, the training data used to estimate the model parameters tends to become too sparse over the multidimensional space of quality indicators. Consequently, it may be beneficial to select a small number of quality indicators that offer the greatest predictive power for the parameters of the error probability distributions. In the present example, as explained above, two quality indicators were chosen, for this reason.

In step 220, the processor 120 obtains the quality indicators (receiving the carrier-to-noise density ratio from the signal processing unit 110, and calculating the window-based quality indicator itself).

In step 230, the processor obtains one or more residual error models, which model the probability distribution of errors in each of the GNSS measurements. According to the present example, the error in each GNSS measurement is modelled separately, as a univariate probability distribution. However, it should be understood that this is not essential. In other examples, some or all of the GNSS measurements may be modelled together in a joint, multivariate probability distribution. Conventionally, residual error models tend to assume that errors have a Gaussian distribution. This assumption is often invalid or unreliable, in practice; however, it is chosen because it can allow considerable simplification of the calculations necessary to infer state information. In examples according to the present disclosure, some (if not all) of the residual errors are modelled by non-Gaussian distributions. By relaxing the Gaussian assumption, residual error models can be designed that better approximate the true distributions of the errors. The simplified calculations associated with the Gaussian assumption are no longer suitable, which potentially increases the computational complexity; however, examples according to the present disclosure mitigate this, by providing techniques to reduce the computational burden of the calculations associated with the non-Gaussian case. It should be understood that different non-Gaussian models may be appropriate for different measurements and different application scenarios. The scope of the present disclosure is not limited to any particular non-Gaussian model (or set of models). Nevertheless, for the sake of clarity and completeness, some exemplary non-Gaussian error models will be described below.

The residual error models are defined in advance and are stored in the memory 130. However, they are conditioned on the quality indicators. In the present example, each residual error model comprises a parametric probability distribution, the parameters of which are directly dependent on the values of the quality indicators.

The residual error model for each pseudorange comprises a Student's T-distribution, as described in EP 3 859 397 A1:

$$f_{\mathrm{pr}}(r) = \frac{\Gamma\left(\frac{\nu+1}{2}\right)}{\sqrt{\nu\pi\sigma^2}\,\Gamma\left(\frac{\nu}{2}\right)}\left(1 + \frac{r^2}{\sigma^2\nu}\right)^{-\frac{\nu+1}{2}}$$

Here, r is the residual, $\nu$ is degrees of freedom parameter, $\sigma$ is a scaling parameter which defines the width of the core distribution, and $\Gamma$ is the gamma function. This distribution allows better modelling of error distributions with heavier tails than a Gaussian (normal) distribution. It has been observed by the inventors that the distribution of real pseudorange errors typically has heavy tails of this kind.

The present inventors have recognised that the carrier phase measurements have specific characteristics, which mean that it can be beneficial to model them using a different form of probability distribution. In a "snapshot" analysis, based on a single epoch, like the present example, only the fractional part of the carrier phase measurement contains meaningful information, because of the unknown integer ambiguity in the number of carrier phase cycles. This fractional part is cyclic, in the sense that adding or subtracting any integer number of cycles returns the same fractional part. It is beneficial for the probability distribution modelling the errors to reflect this - that is, the parametric probability distribution should itself be cyclic. Additionally, for some GNSS signals, there is a potential half-cycle ambiguity, because a data message is modulated on the carrier signal using binary phase shift keying (BPSK). If there is an error in bit-detection, it will lead to (approximately) a half-cycle error in the measured carrier phase.

In order to account for these peculiarities in the distribution of carrier phase errors, the present example uses a probability distribution that is cyclic, and which has a multimodal (in particular, bimodal) distribution. The distribution has a large peak at a carrier phase error of zero cycles, and a smaller peak at a carrier phase error of $\pm 0.5$ cycles. The specific parametric distribution used in the present example is as follows:

$$f_{\mathrm{phase}}(r) = \frac{1-w}{a}\left(1 + \frac{\sin(r\pi)^2}{(\sigma\pi)^2\nu}\right)^{-\frac{\nu+1}{2}} + \frac{w}{a}\left(1 + \frac{\cos(r\pi)^2}{(\sigma\pi)^2\nu}\right)^{-\frac{\nu+1}{2}}$$

where r is the phase residual, $\sigma$ is the t-distribution scale parameter (controlling the breadth of the peaks), $\nu$ is the t-distribution degrees-of-freedom parameter, w is the fraction of measurements which have half-cycle errors, and *a* is a normalisation term, selected to give a total integrated probability of one in the range (-0.5, 0.5) cycles.

The large peak at a carrier phase error of zero cycles models bits that are demodulated correctly. The smaller peak at a carrier phase error of $\pm 0.5$ cycles models bits that are demodulated incorrectly. In particular, it models the probability that a bit is demodulated incorrectly despite passing a cyclic redundancy check (CRC). In other words, it models bits in which an error occurs and the system fails to detect or correct this by an error detection/correction code. The smaller peak also models the risk of a loss of carrier phase lock between bit periods, since this can also cause a half-cycle error in the carrier phase measurement.

The model fit is similar to the pseudorange fit, but now with three basic parameters ($\sigma$, $\nu$ and w). The normalizing constant *a* can be calculated given the three basic parameters. The variation of $\sigma$ as a function of the quality indicators is modelled using a third order truncated polynomial series:

$$\sigma_i = c_0 + c_1 a_i + c_2 b_i + c_3 a_i^2 + c_4 a_i b_i + c_5 b_i^2 + c_6 a_i^3 + c_7 a_i^2 b_i + c_8 a_i b_i^2 + c_9 b_i^3$$

where $\sigma_i$ is the t-distribution $\sigma$ parameter for the ith sample, $c_0$, $c_1$, etc. are the truncated power series coefficients, $a_i$ is the first quality indicator (carrier to noise density ratio) and $b_i$ is the second quality indicator (phase window RMS). In the present example, both $\nu$ and w are modelled as constants (that is, they do not depend on the quality indicators).

The determination of the truncated power series coefficients is done offline in advance. To gather training data, a GNSS receiver (identical to the one that will use the model) is disposed in a vehicle, and a set of training data is gathered while driving the vehicle around various environments. In general, the greater the variability of signal conditions encountered during the gathering of the training data, the more reliable will be the parameterization of the error distributions. In the present example, measurement residuals were obtained using a real time kinematic (RTK) method, using a local (e.g., within 20 km) reference station and fixing the L1 and the L2 integer ambiguities. This dataset was used for fitting the error model parameters - that is, determining the power series coefficients that map the quality indicators to the t-distribution $\sigma$ parameters. The fitting uses a maximum-likelihood approach. The data included measurements from GPS, BeiDou, Galileo and GLONASS satellites.

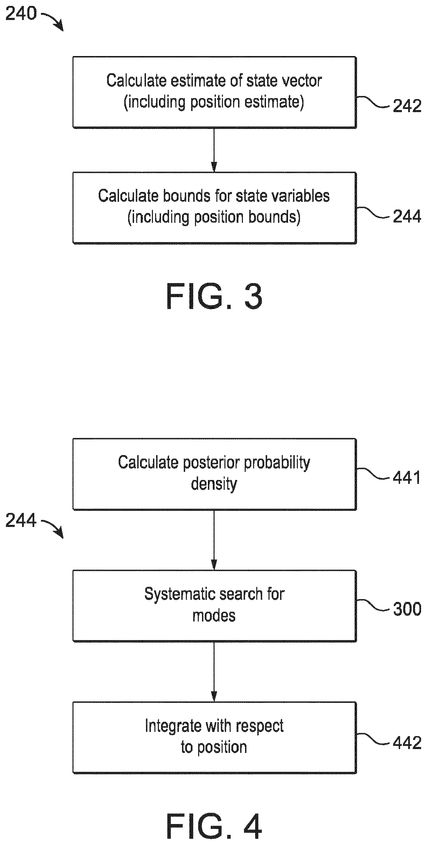

The goal of the method of Fig. 2 is to infer state information. The state information may comprise the values of state variables, or bounds for those state variables, or both. According to the present example, the state information of primary interest is the position of the GNSS receiver and/or a bound on the position of the GNSS receiver. This position bound is the protection level. In step 235, the processor 120 defines a state vector comprising state variables. The state variables include (among others) position variables. In step 240, the processor 120 infers state information based on the one or more residual error models. The step 240 of inferring state information comprises a step 242 of calculating an estimate of the state vector (including an estimate of the position of the GNSS receiver). It further comprises a step 244 of calculating bounds for the state variables (including a position bound - the protection level). These steps are illustrated in Fig. 3.

Step 244 comprises three sub-steps, as illustrated in Fig. 4. In a first sub-step 441, the processor 120 obtains a prior probability distribution and combines it with the relevant residual error model, to calculate a posterior probability density. The prior and the error probability distribution are combined by multiplication. This is done for each of the one or more residual error models. In step 300, the processor performs an analysis of the posterior probability density, to identify the modes of the distribution. This is a pre-processing step, to support the subsequent integration. In step 442, the processor 120 integrates the posterior probability density that was obtained in step 441, in order to calculate the desired state information (in this case, the protection level). The integration exploits knowledge of the modes found in step 300. The pre-processing to locate the modes of the posterior probability can help to increase the accuracy and computational efficiency of the integration. It can avoid the need, for example, to rely on numerical integration techniques to find and integrate over the relevant modes (which might incur a heavy computational cost, when using stochastic numerical integration methods, and which might miss modes depending on the random samples chosen). A variety of integration methods can benefit from knowing the locations of the modes, from step 300. Suitable methods include: importance sampling, based on the identified set of modes; or an MCMC method, based on the identified set of modes. Other relevant integration methods may include the one described in Pompe et al. (Emilia Pompe, Chris Holmes, Krzysztof Łatuszynski, "A Framework for Adaptive MCMC Targeting Multimodal Distributions", January 2019, https://arxiv.org/pdf/1812.02609v2), and those referenced in the introduction section of that work.

Another possibility is approximation of the posterior probability density with a mathematical model which can be integrated analytically, wherein the approximation is based on the identified set of modes. For example, the posterior could be approximated by a Gaussian Mixture Model (GMM) with one or more mixture components centred on each of the modes. This can avoid the need for numerical integration altogether, while still avoiding the need to assume a Gaussian distribution for the residual errors.

Later below, the mode-finding algorithm will be explained. First, it will be described in more detail how the protection level is calculated from the one or more residual error models (in particular, by forming and integrating a posterior probability distribution). It should be understood that the posterior probability distribution can also be used to calculate the position estimate - for example, by finding the maximum of the posterior probability distribution with respect to position. The posterior probability distribution can be used in a similar manner to calculate the maximum likelihood estimates of other state variables. To implement this, the step 242 of calculating the estimate of the state vector can be divided into three steps, just like the step 244 of calculating the bounds. The steps are: firstly, calculating the posterior probability density; secondly, conducting a systematic search for the (significant) modes of the density function; and, thirdly, integrating the posterior probability density to estimate the state variables. If both the state variables and their corresponding bounds are to be estimated in the same way, then this can be done without duplicating the steps shown in Fig. 4. That is, the posterior probability density can be calculated in a single step 441. This step can then be followed by a single integration step (for example, like step 442) applied to the posterior probability density, which calculates both the maximum likelihood estimates and the bounds on those estimates, in one integral. In such an example, it should be understood that steps 242 and 244 of Fig. 3 are effectively performed concurrently.

Determining a protection level from a set of GNSS measurements is a statistical problem that depends on the error probability distribution of the measurements. In the present example, a Bayesian method is used for calculating a posterior probability density (that is, a probability density on position), given a set of known error probability distributions of the measurements. The protection level may then be determined by integrating the posterior probability density. According to the present example, the GNSS measurements are taken from different GNSS signals at the same epoch; this avoids the use of measurements that are correlated in time. The measurements of different GNSS signals at the same epoch can be treated as statistically independent, to a first approximation, unlike measurements of the same signal over different epochs. Since the measurements can be treated as statistically independent, it is not necessary to model the errors in a joint distribution. They can be modelled independently by univariate distributions. This makes the posterior probability easier to determine, making it easier to calculate the state information - in particular, the protection level.

When applied to an inference problem given a set of continuous-domain measurements, Bayes formula can be translated into the following equation:

$$P(state|data) = \frac{P(data|state)P(state)}{P(data)}$$

where $P(state|data)$ is the probability density of a particular state for a given set of observations, $P(data|state)$ is the probability density of a particular set of observations for a given state, $P(state)$ is a prior probability density of the state, and $P(data)$ is the probability density of the set of observations. Information about the state may be inferred from the observables - that is, the GNSS measurements (for example, a pseudorange or a carrier phase). The $P(state|data)$ corresponds to a posterior probability density that needs to be determined in order to compute a protection level of a position estimate. $P(data)$ may be treated as an unknown normalization factor, and can be inferred using the fact that an integral of the posterior probability density $P(state|data)$ over all states equals one. $P(data|state)$ is closely related to the measurement error probability distribution and may be specified by a mathematical model, as discussed below.

According to the present example, the above restatement of Bayes theorem is applied to GNSS measurements. The state vector $x$ includes position variables. It may also include other variables, including but not limited to a clock bias, an instrumental bias, or an atmospheric parameter. The clock bias may include a receiver clock bias and a satellite clock bias. The GNSS measurements are a set of observations, $z$, including pseudorange measurements and carrier phase measurements. The processor 120 also obtains the quality indicators $q$ (metadata), which indicate information about the quality of the observations.

The set of observations $z$ can be partitioned into two components: a system model $h(x)$ that relates the state $x$ to the observables of the set of observations $z$, and a random measurement error component (residual) $r$:

$$z = h(x) + r$$

The system model includes a mathematical model for the carrier phase and a mathematical model for the pseudorange (examples of which are detailed in EP 3 859 397 A1).

The probability density for the residual $r$ is defined by a function $f_{joint}(r|\theta,q)$, which specifies the probability density for a specified set of residuals $r$, given error model parameters $\theta$ and the set of quality indicators $q$. Returning to Bayes theorem, the posterior probability density $P(x|z,q,\theta)$ can be expressed as:

$$P(x|z,q,\theta) = \frac{P(z|x,q,\theta)P(x)}{P(z|q,\theta)}$$

Taking the denominator $P(z|q,\theta)$ to be an unknown normalization constant, and $r = z - h(x)$, the posterior probability density $P(x|z,q,\theta)$ can be expressed as follows:

$$P(x|z,q,\theta) \propto P(z|x,q,\theta)P(x)$$

$$P(x|z,q,\theta) \propto f_{joint}(z - h(x)|\theta,q)P(x)$$

As explained above, in determining the posterior probability density $P(x|z,q,\theta)$, the observables from a single measurement epoch are considered. For a single measurement epoch, since there is no time correlation between the measurements, the measurements can be considered as independent. Thus, the joint probability density $f_{joint}(r|\theta,q)$ can be calculated as a simple product of the independent probability density $f(r|\theta,q)$ of each observation:

$$f_{joint}(z - h(x)|\theta,q) = \prod_i f(z_i - h_i(x)|\theta,q_i)$$

Thus, the definition of the posterior probability density can be simplified as follows:

$$P(x|z,q,\theta) \propto P(x) \prod_i f(z_i - h_i(x)|\theta,q_i)$$

In this way, the measurement error distribution is simplified to a one dimensional function $f(r|\theta,q)$ of the residual $r$, and this error distribution may be determined using experimental data. A protection level of a position estimate may be further determined from the posterior probability density $P(x|z,q,\theta)$, by integrating the posterior probability density $P(x|z,q,\theta)$ over the state $x$. As mentioned already above, the integration may be done numerically, or the posterior may be approximated by a mathematical model that can be integrated analytically. To ease the computational burden of the numerical integration (or to support the generation of the approximating mathematical model), the posterior probability is first analysed to find its modes.

The modes arise as a result of the integer carrier phase ambiguities. Each possible combination of integers resolving these ambiguities will, in principle, create a mode in the distribution. In principle, there exists an infinite number of such combinations (and therefore an infinite number of modes). In practice, however, only certain combinations of integers will produce modes having significant posterior probabilities.

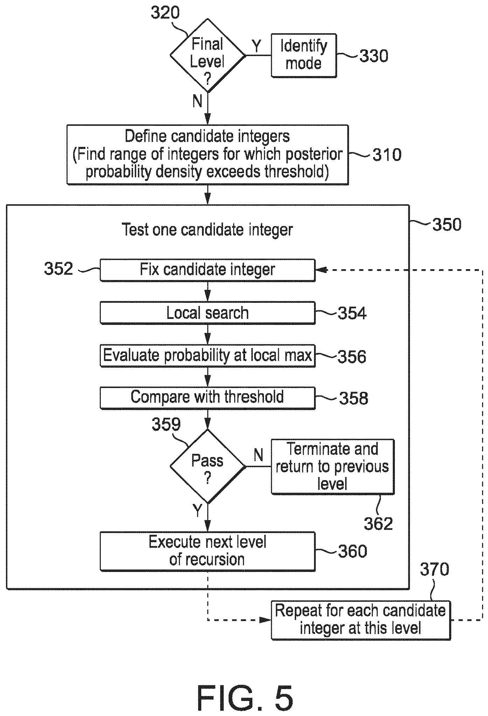

Fig. 5 shows a method of finding the modes of the posterior probability density, according to an example. The search is recursive. Fig. 5 illustrates the steps performed at one level of recursion. It should be understood that these are repeated for each level. The recursive search includes one level of recursion for each one of the carrier phase ambiguities, plus one final level at the end when all of the carrier phase ambiguities have been fixed. As the method proceeds through the levels, an additional carrier phase ambiguity is fixed to an integer value (or set of values) at each level (other than the final level). Thus, in one iteration at the first level, one of the carrier phase ambiguities is fixed to an integer value and the others are left floating. At the final level, all of the carrier phase ambiguities have been fixed to integer values and none are floating.

At each level of recursion (other than the final level), the method comprises two main steps. Firstly, in step 310, the processor 120 defines one or more candidate integer ambiguity values associated with the carrier phase measurement for that level. Secondly, in step 350, the processor tests each of the defined candidate integer ambiguity values. For each candidate that passes the test, the method proceeds to the next level of recursion. At the final level, when all of the carrier phase ambiguities have been fixed to integers, there is no need to define candidate integers (step 310) and no need for the test 350, since there are no more ambiguities to fix and no further level of recursion to which the processor can proceed.

In the present implementation, the step 310 of defining the candidate integer ambiguity values comprises identifying a range of integer values (for the carrier phase ambiguity to be fixed at the current level) for which the posterior probability density is above a predetermined threshold. This range is based around the current float solution for the complete set of ambiguities that have not yet been fixed. Starting with the integer value that is nearest to the float solution, the method proceeds by identifying a first sub-range of integer values that are greater than this starting integer value. A second sub-range of integer values that are less than the starting integer value is also identified. In the present example, these two sub-ranges are identified one integer at a time. To identify the first sub-range, the processor 120 successively increments the starting integer value by one. At each increment, the processor 120 checks whether the value of the posterior probability density associated with the current integer value is above a predetermined threshold. If the posterior is above the threshold, then the current integer value is a viable candidate integer ambiguity value, and the processor 120 proceeds to increment the integer value again and check the next integer in the same way. This is done until an integer is found for which the posterior probability density is no longer above the threshold. The upper end point of the range is defined as the last integer to fulfil the threshold criterion (that is, the last integer with an associated probability that is above the threshold).

Similarly, to identify the second sub-range, the processor 120 starts from the starting integer value (the integer nearest the float solution) and decrements successively by one. Again, for each decrement, the processor 120 checks whether the value of the posterior probability density is above or below the predetermined threshold. This process continues until an integer is found for which the posterior is less than or equal to the threshold. The lower endpoint of the range is defined as the last integer whose posterior probability exceeded the threshold.

The set of candidate integer ambiguity values for the current level consists of all integers falling within the identified range. The assumption is that the posterior probability density decreases monotonically as the integer values move away from the float solution. Although not mathematically guaranteed, it has been found that this assumption is usually satisfied in practice.

It should be noted that this algorithm for finding the range of candidate integers is merely exemplary. It has the benefit of being straightforward to implement, but other strategies may be adopted instead of it.

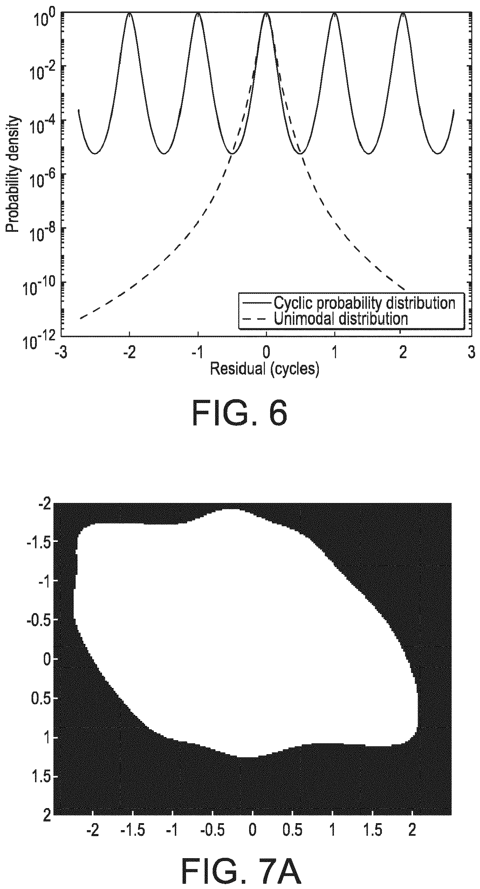

Once the set of candidate integer ambiguity values has been defined in step 310, the processor 120 proceeds to test each one, in step 350. Taking one candidate integer ambiguity value at a time, the processor fixes that candidate integer ambiguity value (step 352). This involves replacing the cyclic residual error model for the carrier phase ambiguity with a unimodal distribution. Fig. 6 shows an example of a cyclic probability distribution (solid line) and the unimodal bounding distribution (dashed line) with which it is replaced. For the avoidance of confusion, it is noted that the cyclic probability distribution illustrated in Fig. 6 is not the bimodal cyclic probability distribution, $f_{phase}(r)$, defined previously above. The cyclic distribution in Fig. 6 is simplified for the purposes of illustration, in that there is no modelling of the half-cycle error discussed above - there is therefore no additional (smaller) peak between the modes created by the integer ambiguity. The plot in Fig. 6 shows the replacement unimodal distribution centred on an integer value of zero, purely for simplicity of depiction. However, it should be understood that it will be centred on the integer value to be fixed, in practice (which could be any integer). In the present example, the unimodal distribution that replaces the cyclic distribution is a Student's T-distribution.

For each fixed candidate integer ambiguity value, the processor 120 performs a local search (step 354) of the posterior probability density to find a float solution for any remaining (not yet fixed) carrier phase ambiguities and the other state variables of the state vector (including, for example, the position variables). The local search finds a local maximum of the posterior probability density in the neighbourhood of the newly fixed candidate integer ambiguity value (as well as the integer ambiguities fixed at previous levels of recursion). At the penultimate level of recursion, immediately after the last candidate integer ambiguity value has been fixed, the local search is no longer searching over carrier phase ambiguity values, but only over the other state variables of the state vector (for example, the position variables).

The local search involves solving a non-linear optimisation problem. This can be approached in various ways. In the present implementation, the optimisation problem is posed as a model fit and solved using a Gauss-Newton method. This is a hybrid between Newton's method and Steepest Descent, as described in Section 2.2 (equation 2.11) of "METHODS FOR NON-LINEAR LEAST SQUARES PROBLEMS" by K. Madsen, H.B. Nielsen, O. Tingleff, Informatics and Mathematical Modelling, Technical University of Denmark 2004.

The output of the local search 354 comprises a new float solution for any remaining (not yet fixed) carrier phase ambiguities (and for the state vector in general). At step 356, the processor 120 evaluates the posterior probability density at the local maximum found by the local search 354. This probability value is compared with a predetermined threshold at step 358. If the probability exceeds the predetermined threshold (see step 359), then the present candidate integer ambiguity value has passed the test and the method proceeds to the next level of recursion (step 360). On the other hand, if the probability does not exceed the predetermined threshold, then the present candidate integer ambiguity value has failed the test because it is not associated with a high enough probability to be considered significant. In this case, there is no point proceeding to further levels of recursion, to fix ambiguity values for other carrier phase measurements in conjunction with the present integer value; therefore, the processor 120 terminates the current level of recursion and returns to the previous level (step 362).

In the present example, the predetermined threshold in step 358 is set relative to the posterior probability of the float solution at the first level of recursion. It is defined by a negative offset relative to that posterior probability. In this way, it captures all modes down to a fixed "depth" (a fixed difference in probability) below the float solution. In other examples, the threshold could be set in other ways. For instance, it could be defined by a negative offset relative to the maximum likelihood integer fixed solution at the first level of recursion.

As mentioned above, as long as the current candidate integer ambiguity value passes the threshold test (steps 358 and 359), the method proceeds to the next level of recursion. If there are one or more remaining (not yet fixed) carrier phase ambiguities, then candidate integer ambiguity values will be defined (step 310) for the next carrier phase measurement, and duly tested (step 350). That level of recursion will continue to the next level, and so on (provided the threshold test 358, 359 is met), until all carrier phase ambiguities have been fixed. Eventually the processing at one level is complete and the method returns to the preceding level of recursion. At this point, if there are more candidate integer ambiguity values to test (at this preceding level of recursion), the processor repeats step 350 in a further iteration (see step 370). The testing in step 350 is iterated until all of the candidate integer ambiguity values defined in step 310 have been tested.

It will be noted that each iteration of the testing (step 350) involves a local search of the posterior probability density. Furthermore, each iteration of the testing (step 350) involves recursively executing further levels (step 360), thereby implementing the depth-first search. Each of these further levels (other than the final level) will define their own ranges of candidate integer ambiguity values to be tested, each of which will involve its own local search (step 354). Consequently, the local search of step 354 may be performed many times during the execution of the overall systematic search 300. For this reason, it is desirable that the local search be implemented efficiently. This is achieved, in the present example, by the use of the Gauss-Newton method.

The final level of recursion is slightly different from the other levels. At the final level, all of the carrier phase ambiguities have already been fixed and there is no possibility to progress to a further level. Consequently, it is not necessary to define candidate integers (step 310) or to execute the testing of step 350. The candidate integer ambiguity values for the final carrier phase measurement, which were identified in step 310 of the preceding (penultimate) level of recursion, correspond to modes (in particular, viable, significant modes) of the posterior probability density function. This "special" behaviour at the final level is represented in Fig. 5 by steps 320 and 330. Step 320 checks whether the current level of recursion is the final level of recursion. If not, the method proceeds to step 310 and 350 as described previously above. On the other hand, if the current level of recursion is the final level of recursion, the method proceeds to step 330, where a mode of the distribution is identified. The mode corresponds to the complete set of candidate integer ambiguities that were fixed in all of the preceding levels of recursion. The location (defined by the coordinates in state space) of the mode has already been established in the local search 354 at the penultimate level of recursion.

When modes (that is, the state-space coordinates of a local maximum in the posterior probability density) are found, at the final level of recursion, they are added to an overall list of modes. It should be understood that the final level of recursion will typically be reached many times, in the many different branches of the systematic, depth-first search. (The number of times that the final level of recursion is reached is a product of the numbers of candidate integer ambiguities from each of the preceding levels of recursion.)

For completeness, it is noted that step 310 is not always guaranteed to find a nonzero number of candidate integer ambiguity values. It is, in principle, possible that the threshold test of steps 358 and 359 is passed (at the preceding level of recursion), and the method continues to the next level of recursion (in step 360), only to find (in step 310 of the new level) that there is no integer value that has a high enough probability to be considered as a candidate integer ambiguity value for the new level of recursion. This can occur when the integer value nearest to the float solution has fallen below the predetermined threshold for consideration as a candidate integer ambiguity value.

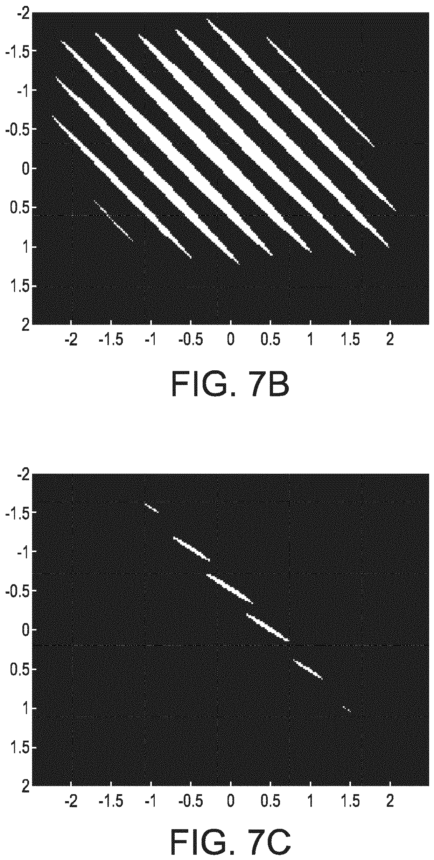

Figs. 7A, 7B, and 7C give a graphical example of the recursive search. Each plot shows the two-dimensional posterior (in position variables x and y). Fig. 7A shows the posterior constrained only by the pseudoranges. Fig. 7B shows the corresponding posterior after it has been additionally constrained by one carrier phase measurement. The cyclic nature of the integer part of the carrier phase gives rise to a multimodal distribution, with maxima arranged in a direction that is related to the direction of incidence of the GNSS signal. Fig. 7C shows the posterior probability density at the second level of recursion, where the integer ambiguity for the first carrier phase has been fixed to one of the candidate integer ambiguity values at that level (one of the elongated ellipses in Fig. 7B), and a set of candidate integer ambiguities for the second level has been defined. The recursion continues in this way, subdividing one mode at a time, in the distribution at each level, until the final level is reached when all of the carrier phases have been considered. This finds all modes in the posterior probability density down to a specified threshold level of probability (subject to the assumption that the probability density is monotonically decreasing around the local maximum found in each local search).

It should be understood that the scope of the present disclosure is not limited to the examples described above. Many variations will be apparent to those skilled in the art, based on the foregoing description.

For instance, it is not essential that all of the error distributions are conditioned on the quality indicators. In some examples, a residual error model may define a distribution that describes the probability of errors independently of the quality indicators. This may simplify the task of gathering the training data and estimating the model parameters, since less data may be required to fit parameters to a single marginal distribution (as compared with the amount of data required to fit parameters conditioned on the quality indicators).

It should be understood that the specific parametric distributions used in the examples above are not limiting. Those skilled in the art may select other distributions (parametric or non-parametric) that have the general characteristics explained above.

As mentioned already above, although the examples have focused largely on the calculation of state bounds (in particular, position bounds in the form of a protection level), the residual error models are useful for calculating state information other than (or in addition to) state bounds. In particular, the residual error models may be useful for calculating maximum-likelihood estimates of the state itself.

Although in the example above the state vector included position variables, and the state information to be inferred concerned the position estimate and/or position bounds, this is not limiting. In other examples, the state vector might not include position variables and/or the state information to be inferred might concern other state variables. For instance, the position of the GNSS receiver might be known (or indeed fixed - as may be the case for a terrestrial reference station). The ultimate goal of processing the GNSS measurements may be to infer information about other state variables, such as errors in the orbits of the satellites, or errors in the satellite clocks. In such examples, the integer ambiguities in the carrier phase measurements may still give rise to modes in the posterior probability density for the state variable(s) of interest. Therefore, it would be desirable to identify such modes explicitly, for the same reasons that it is desirable when attempting to infer state information relating to position.

In general, in the flowcharts of Figs. 2-5, the arrows between the steps do not necessarily imply a causal relationship between those steps. They merely indicate one exemplary order in which the steps may be performed. Method steps may be carried out in a different order from the exemplary order shown in the drawings. For example, the step 220 of obtaining the quality indicators need not be performed after the step 210 of obtaining the GNSS measurements. Although some quality indicators (such as the window-based quality indicator, described above) are indeed calculated based on the GNSS measurements, other quality indicators are not calculated from the GNSS measurements. Such quality indicators may be calculated before (or at the same time as) the GNSS measurements are obtained.

In the example of Fig. 5, the test 320 for the "final level" is presented as occurring at the start of each level of recursion. It could alternatively be performed at the end of each level of recursion. For example, if the test at step 359 is passed, the method could check whether all carrier phase ambiguities have been fixed. If they are not yet all fixed, the method could proceed to the next level of recursion (step 360). If they are all fixed, the method could proceed to identify the mode (step 330). The overall sequence of operations and the effect would be the same as for the flowchart of Fig. 5; however, there would nominally be one less level of recursion. The "final level" in Fig, 5 is the level *after* the last carrier phase ambiguity is fixed. In the described variant, the last carrier phase ambiguity would be fixed at the final level.

In the examples described above, there were two quality indicators - namely, the carrier to noise density ratio and a window-based quality indicator. These have been found by the inventors to offer a complementary combination; however, it should be understood that the scope of the present disclosure is not limited exclusively to the use of these two quality indicators.

In the example described above, the range of candidate integer ambiguity values at each level of recursion was found in step 310 by an incremental search (incrementing and decrementing the integer value from a starting integer value lying nearest to the float solution). There are various other ways of searching for the range of candidate integer ambiguity values. The incremental search described above can be considered as being characterised by a step-size of one. It can be generalised by changing the step size. That is, the step size may be larger than one. For instance, the search for each endpoint of the range could proceed with steps larger than one until a probability value lower than the threshold is found, at which point the method steps in the opposite direction in smaller steps to find the last integer value that meets the threshold criterion. In some examples, the step size may vary at each step. In one example, the first step is a relatively large step (for instance, a value of 32). At each successive step the step size is reduced by half. The direction of each step is dictated by whether the probability value found at the currently tested integer is above or below the threshold. This implements a binary search. Another possibility is a secant search. Such search algorithms may converge on the endpoint of the range faster than the incremental search in the example described earlier above. This may happen, in particular, if the range of candidate integer ambiguity values is large. However, for small ranges, the simple incremental search described above may be as efficient as, or more efficient than, a search with larger step sizes.

In the examples described above, each mode was characterized by the coordinates, in state-space, of the respective local maximum of the posterior probability density. Using a unique point in state space to characterise each mode provides a compact and convenient way to specify the modes. However, it is not the only way to specify them. In other examples, one or more modes could be characterised (alternatively or additionally to using the coordinates of the local maximum) by defining a finite region of state space corresponding to the mode. For instance, a region of state-space could be defined by a bounding volume, within which the respective local maximum of the posterior probability density is located. The bounding volume may be defined by specifying the upper and lower limits of a range for each state variable. This defines a box in the state-space. In some instances, the bounding volume may be selected so that the posterior probability density decreases monotonically from the local maximum, within the bounding volume.

It should be understood that various components illustrated in Fig. 1 may be implemented in hardware, or software, or a mixture of both. Furthermore, some components may be grouped together in a given implementation or may be implemented separately. In the present implementation, block 105 is implemented entirely in hardware, block 110 is implemented partially in hardware, and the remaining components (downstream in the signal processing chain) are implemented in software. In some examples, the navigation filter 122 may be implemented in a separate software module, running on a separate processor from the processor 120. Other implementations are possible, which divide and distribute the various functions differently between hardware and software, or between different hardware components, software modules and/or processors running the software.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, or CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

**Claims**

1. A method of processing a plurality of GNSS measurements, comprising:

> obtaining (210) the plurality of GNSS measurements, wherein the plurality of GNSS measurements includes a plurality of carrier phase measurements;
> defining (235) a state vector, the state vector comprising state variables;
> obtaining (441) a posterior probability density for the state vector, wherein the posterior probability density is based on one or more residual error models describing a probability distribution of errors in each of the GNSS measurements, the one or more residual error models including at least one non-Gaussian model; and performing a systematic search (300) of the posterior probability density to identify a set of modes of the posterior probability density.

2. The method of claim 1, wherein the systematic search (300) comprises a recursive search including a level of recursion for each carrier phase measurement, each level of recursion other than a final level comprising:

   defining (310) one or more candidate integer ambiguity values associated with the carrier phase measurement for that level; and
   testing (350) each candidate integer ambiguity value.

3. The method of claim 2, wherein defining (310) the one or more candidate integer ambiguity values comprises identifying a range of integer values for which the posterior probability density is above a predetermined threshold.

4. The method of claim 2 or claim 3, wherein the state vector includes carrier phase ambiguities and wherein testing (350) each candidate integer ambiguity value comprises:

   fixing (352) the candidate integer ambiguity value; and
   performing a local search (354) of any remaining carrier phase ambiguities and other state variables of the state vector.

5. The method of claim 4, wherein the local search (354) comprises solving a non-linear optimization problem.

6. The method of claim 4 or claim 5, wherein fixing (352) the candidate integer ambiguity value comprises replacing a cyclic probability density model for the carrier phase measurement with a unimodal probability density model.

7. The method of any one of claims 2 to 6, wherein testing (350) each candidate integer ambiguity value comprises:

   evaluating (356) a probability density associated with the candidate integer ambiguity value; and
   comparing (358) the probability density with a threshold.

8. The method of claim 7, wherein the method comprises, responsive to the probability density exceeding the threshold, continuing (360) the recursion to the next level.

9. The method of claim 7 or claim 8, wherein the method comprises, responsive to the probability density not exceeding the threshold, terminating the current level of the recursion and returning (362) to the preceding level.

10. The method of any one of claims 2 to claim 9, comprising, at the final level of recursion, identifying (330) a mode of the posterior probability density associated with the candidate integer ambiguity values fixed at the preceding levels of recursion, wherein the mode is associated with a combination of the candidate integer ambiguity values from across all of the levels.

11. The method of any one of the preceding claims, further comprising inferring (240) state information based on the posterior probability density, wherein the inferring comprises integrating (442) the posterior probability density, and wherein the integrating is based on the identified set of modes.

12. The method of claim 11, wherein the inferred state information comprises at least one of:

   a position estimate; and
   an error bound for the position estimate.

13. The method of claim 11 or claim 12 wherein the integrating (442) comprises at least one of:

   importance sampling based on the identified set of modes;
   an MCMC method based on the identified set of modes; and
   approximation of the posterior probability density with a mathematical model which can be integrated analytically, wherein the mathematical model is based on the identified set of modes.

14. A computer program comprising computer program code configured to cause one or more processors to perform all the steps of the method as claimed in any one of the preceding claims when said computer program is run on said one or more processors.

15. A GNSS receiver (100) comprising:

a signal processing unit (110), configured to produce a plurality of GNSS measurements wherein the plurality of GNSS measurements includes a plurality of carrier phase measurements; and
at least one processor (120), configured to:

obtain (210) the plurality of GNSS measurements;
define (235) a state vector, the state vector comprising state variables;
obtain (441) a posterior probability density for the state vector, wherein the posterior probability density is based on one or more residual error models describing a probability distribution of errors in each of the GNSS measurements, the one or more residual error models including at least one non-Gaussian model; and
perform (442) a systematic search of the posterior probability density to identify a set of modes of the posterior probability density.

FIG. 1

Obtain GNSS Measurements ⌐∿210

Obtain quality indicators ⌐∿220

Obtain one or more residual error models ⌐∿230

Define state vector ⌐∿235

Infer state information based on
the one or more residual error models ⌐∿240

# FIG. 2

240

Calculate estimate of state vector
(including position estimate) — 242

↓

Calculate bounds for state variables
(including position bounds) — 244

# FIG. 3

Calculate posterior probability
density — 441

244

↓

Systematic search for
modes — 300

↓

Integrate with respect
to position — 442

# FIG. 4

FIG. 5

FIG. 6

FIG. 7A

FIG. 7B

FIG. 7C

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUN ET AL: "Carrier Phase-based RAIM using a Gaussian Sum Filter", GNSS 2009 - PROCEEDINGS OF THE 22ND INTERNATIONAL TECHNICAL MEETING OF THE SATELLITE DIVISION OF THE INSTITUTE OF NAVIGATION (ION GNSS 2009), THE INSTITUTE OF NAVIGATION, 8551 RIXLEW LANE SUITE 360 MANASSAS, VA 20109, USA, 25 September 2009 (2009-09-25), pages 1666-1674, XP056010612, * figure 1; equations (9)-(17) * * sections: Introduction; Carrier Phase Error model; Gaussian Sum Filter; Protection Level. * | 1-15 | INV. G01S19/20 G01S19/44 |
| X | URS NIESEN ET AL: "Satellite Positioning with Large Constellations", ARXIV.ORG, CORNELL UNIVERSITY LIBRARY, 201 OLIN LIBRARY CORNELL UNIVERSITY ITHACA, NY 14853, 21 August 2018 (2018-08-21), XP081175549, * abstract * * figures 2, 4; equations (1)-(3), (9)-(10) * * sections: I. Introduction; II. Problem Setting; III.B Carrier-Phase Positioning * | 1-15 | TECHNICAL FIELDS SEARCHED (IPC)<br><br>G01S |
| X | EP 3 859 397 A1 (UBLOX AG [CH]) 4 August 2021 (2021-08-04) * figures 2, 6 * * paragraphs [0051] - [0061], [0086] - [0102] * | 1-15 | |

-/--

The present search report has been drawn up for all claims

| Place of search | Date of completion of the search | Examiner |
|---|---|---|
| Munich | 24 November 2023 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

Application Number

EP 23 16 8078

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/299562 A1 (GREEN GARY NATHAN [US]) 18 October 2018 (2018-10-18)<br>* figures 4-7, 9 *<br>* paragraphs [0001] - [0004], [0049] - [0072] *<br>* paragraphs [0075] - [0080] *<br>----- | 2-4,6-10 | |

TECHNICAL FIELDS SEARCHED (IPC)

The present search report has been drawn up for all claims

| Place of search | Date of completion of the search | Examiner |
|---|---|---|
| Munich | 24 November 2023 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8078

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2023

| Patent document cited in search report | | Publication date | Patent family member(s) | | Publication date |
|---|---|---|---|---|---|
| EP 3859397 | A1 | 04-08-2021 | CN 113281793 | A | 20-08-2021 |
| | | | EP 3859397 | A1 | 04-08-2021 |
| | | | US 2021239845 | A1 | 05-08-2021 |
| US 2018299562 | A1 | 18-10-2018 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3859397 A1

**Non-patent literature cited in the description**

- *A Framework for Adaptive MCMC Targeting Multimodal Distributions,* January 2019, https://arxiv.org/pdf/1812.02609v2

- METHODS FOR NON-LINEAR LEAST SQUARES PROBLEMS. **K. MADSEN ; NIELSEN ; O. TINGLEFF.** Informatics and Mathematical Modelling. Technical University of Denmark, 2004